# EUROPÄISCHE PATENTSCHRIFT

(11) **EP 1 413 792 B1**
(45) Veröffentlichungstag und Bekanntmachung des Hinweises auf die Patenterteilung: **25.07.2012**
(21) Anmeldenummer: 03023449.6
(22) Anmeldetag: 18.10.2003
(51) Int. Cl.: F16D 69/02, F16D 21/06, F16D 13/70

(54) **Doppelkupplungsanordnung**
Double clutch assembly
Ensemble à embrayage double

(30) Priorität: 24.10.2002 DE 10249456
(43) Veröffentlichungstag der Anmeldung: 28.04.2004
(73) Patentinhaber: ZF Friedrichshafen AG, 88038 Friedrichshafen (DE)
(72) Erfinder: Petersheim, Michael, Dipl.-Ing., 97493 Bergrheinfeld (DE); Diemer, Matthias, Dr., 97464 Niederwerrn (DE); Hoffelner, Ingrid, 97478 Knetzgau (DE)

(56) Entgegenhaltungen:
- EP-A- 0 701 665
- EP-A- 1 134 447

## Beschreibung

Die vorliegende Erfindung betrifft eine Doppelkupplungsanordnung, umfassend zwei Kupplungsbereiche jeweils mit einer Anpressplatte und einer Widerlageranordnung, welche Reiboberflächen zur reibmäßigen Zusammenwirkung mit einer Reibbelagsanordnung einer jeweils zugeordneten Kupplungsscheibe aufweisen. Eine solche Doppelkupplungsanordnung mit einer Kupplungsscheibe, deren Reibbelagsanordnung aus einem nicht-organischen Material, insbesondere einem Sintermetallreibbelag aufgebaut ist, ist bereits mit der EP 1 134 447 A2 bekannt geworden.

Doppelkupplungsanordnungen unterliegen im Bereich verschiedener reibend miteinander in Wechselwirkung tretender Bauteile, also der Anpressplatten und Widerlageranordnungen bzw. der Reibbelagsanordnungen der verschiedenen Kupplungsscheiben, einer sehr starken Belastung. Dies ist insbesondere auch darauf zurückzuführen, dass in Phasen, in welchen die Drehmomentübertragung von einem der Kupplungsbereiche auf den anderen übergeben wird, in beiden Kupplungsbereichen ein Schlupf mit entsprechender Wärmeentwicklung und mit entsprechendem Abrieb im Bereich der reibend aneinander anliegenden Bauteile auftreten wird. Auch in Phasen, in welchen einzelne Kupplungsbereiche über längere Zeit hinweg schlupfend betrieben werden, werden die verschiedenen reibend wirksamen Bauteile auf Grund der sehr kompakten und somit thermisch vergleichsweise abgekapselten Bauweise sehr stark belastet.

Es ist die Aufgabe der vorliegenden Erfindung, eine Doppelkupplungsanordnung vorzusehen, bei welcher reibend wirksam werdende Bauteile höheren Belastungen ausgesetzt werden können.

Gemäß der vorliegenden Erfindung wird diese Aufgabe gelöst durch eine Doppelkupplungsanordnung, umfassend zwei Kupplungsbereiche jeweils mit einer Anpressplatte und einer Widerlageranordnung, welche Reiboberflächen zur reibmäßigen Zusammenwirkung mit einer Reibbelagsanordnung einer jeweils zugeordneten Kupplungsscheibe aufweisen, wobei die Reibbelagsanordnung einer Kupplungsscheibe von wenigstens einem der beiden Kupplungsbereiche wenigstens zum Teil aus nicht-organischem Material aufgebaut ist.

Der Aufbau von Reibbelagsanordnungen bzw. Teilen derselben aus nichtorganischen Materialien hat zur Folge, dass Reibmaterialien zum Einsatz gelangen, die einerseits eine sehr gute Verschleißfestigkeit aufweisen, also auch über längere Zeit hinweg einem Schlupf ausgesetzt werden können, als organisch aufgebaute Reibbeläge, die andererseits auch höheren Temperaturen ausgesetzt werden können bzw. bei höheren Temperaturen nicht in ihrer Leistungsfähigkeit beeinträchtigt werden.

Durch den Einsatz sehr verschleißfester Materialien im Bereich der Reibbelagsanordnungen werden die mit diesen in Reibkontakt tretenden Baugruppen, also die Anpressplatten bzw. die Widerlageranordnungen, im Allgemeinen verschleißmäßig stärker belastet. Um dafür zu sorgen, dass an diesen Bauteilen bedingt durch den Einsatz nicht-organischer Reibbelagsmaterialien nicht übermäßiger Verschleiß auftritt, wird erfindungsgemäß vorgeschlagen, dass die Anpressplatte oder/und die Widerlageranordnung des wenigstens einen der beiden Kupplungsbereiche wenigstens im Bereich ihrer Reiboberflächen aus C/C-SiC-Material oder alternativ aus partikelverstärktem Aluminium, bekannt unter dem Handelsnamen Duralcan^{®}, aufgebaut sind.

Mit den abhängigen Ansprüchen sind vorteilhafte Ausgestaltungen und Weiterbildungen der Erfindung angegeben.

Um insbesondere zu verhindern, dass die unter Fliehkrafteinwirkung auf derartige Reibbelagsanordnungen einwirkenden Kräfte zu einer Beschädigung führen können, wird vorgeschlagen, dass die Reibbelagsanordnung der Kupplungsscheibe des wenigstens eine der beiden Kupplungsbereiche eine Mehrzahl von in Umfangsrichtung um eine Drehachse aufeinander folgenden Reibbelagssegmenten umfasst, und dass wenigstens eines der Reibbelagssegmente aus nicht-organischem Material aufgebaut ist.

Hinsichtlich bevorzugter Aufbaumaterialien kann vorgesehen sein, die Reibbelagsanordnung der Kupplungsscheibe des wenigstens einen der beiden Kupplungsbereiche wenigstens zum Teil aus Metallmaterial, vorzugsweise Metallsintermaterial, aufzubauen. Weiterhin ist es möglich, die Reibbelagsanordnung der Kupplungsscheibe des wenigstens einen der beiden Kupplungsbereiche wenigstens zum Teil aus Keramikmaterial, vorzugsweise keramischem Sintermaterial, aufzubauen.

Die vorliegende Erfindung wird nachfolgend in Bezug auf die beiliegenden Zeichnungen detailiert beschrieben. Es zeigt:
- Fig. 1: eine Teil-Längsschnittansicht einer Doppelkupplung;
- Fig. 2: eine Detailansicht eines in Fig. 1 nicht erkennbaren Abschnitts;
- Fig. 3: eine abgewandelt ausgestaltete Doppelkupplung;
- Fig. 4: eine Teil-Axialansicht einer Kupplungsscheibe mit einem Reibbelags- segment;
- Fig. 5: eine Schnittansicht der in Fig. 4 gezeigten Kupplungsscheibe, ge- schnitten längs einer Linie V-V in Fig. 4.

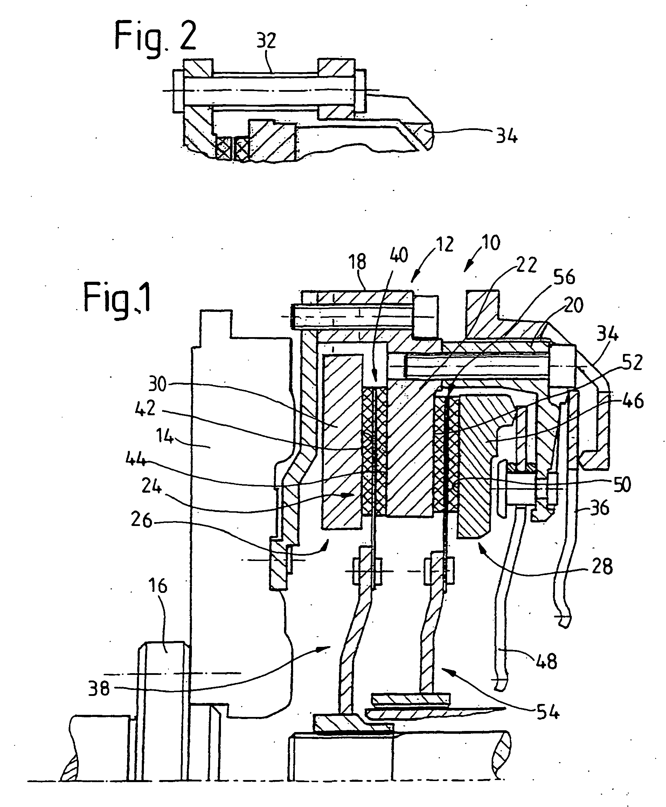

In den Figuren 1 und 2 ist eine erste Ausgestaltungsform einer Doppelkupplungsanordnung 10 gezeigt. Diese Doppelkupplungsanordnung 10 umfasst eine allgemein mit 12 bezeichnete Gehäuseanordnung, welche über einen Torsionsschwingungsdämpfer 14 oder auch direkt an eine Antriebswelle 16 drehfest angekoppelt werden kann. Die aus zwei miteinander verschraubten Gehäuseteilen 18, 20 im Wesentlichen aufgebaute Gehäuseanordnung 12 bildet in ihrem zentralen Bereich mit einem ringscheibenartigen Abschnitt 22 eine allgemein mit 24 bezeichnete Widerlageranordnung für zwei Kupplungsbereiche 26, 28 dieser Doppelkupplungsanordnung 10. Eine Anpressplatte 30 des ersten Kupplungsbereichs 26 ist an einer Seite des Ringscheibenanbschnitts 22 angeordnet und ist an ihrem radial äußeren Bereich über Zuganker 32 mit einem Betätigungskraftübertragungselement 34 (s. Fig. 2) gekoppelt, das im Wesentlichen das Gehäusebauteil 20 umgebend angeordnet ist. Ein sich bezüglich des Gehäusebauteils 20 an der Außenseite desselben abstützender Kraftspeicher 36 beaufschlagt das Element 34, welches über den Zuganker 32 auf die Anpressplatte 30 einwirkt und diese in Richtung auf die Widerlageranordnung 24 zu presst. Eine Kupplungsscheibe 38 des ersten Kupplungsbereichs 26 liegt mit ihren allgemein mit 40 bezeichneten Reibbelägen zwischen einer Reibfläche 42 der Anpressplatte 30 und einer Reibfläche 44 des ringscheibenartigen Abschnitts 22 bzw. der Widerlageranordnung 24, so dass im Einrückzustand zwischen diesen beiden Reibflächen 42, 44 die Kupplungsscheibe 38 mit ihren Reibbelägen 44 eingespannt ist.

Der zweite Kupplungsbereich 28 umfasst an der anderen axialen Seite der Widerlageranordnung 24 eine Kupplungsscheibe 46, die unter der Beaufschlagung eines sich an der Innenseite des Gehäusebauteils 20 abstützenden Kraftspeichers 48 steht. Dieser presst die Anpressplatte 48 mit ihrer Reiboberfläche 50 auf eine Reiboberfläche 52 des ringscheibenartigen Abschnitts 22 bzw. der Widerlageranordnung 24 zu, so dass eine Kupplungsscheibe 54 des zweiten Kupplungsbereichs 28 mit ihren Reibbelägen 56 zwischen den beiden Reiboberflächen 50, 52 einspannbar ist.

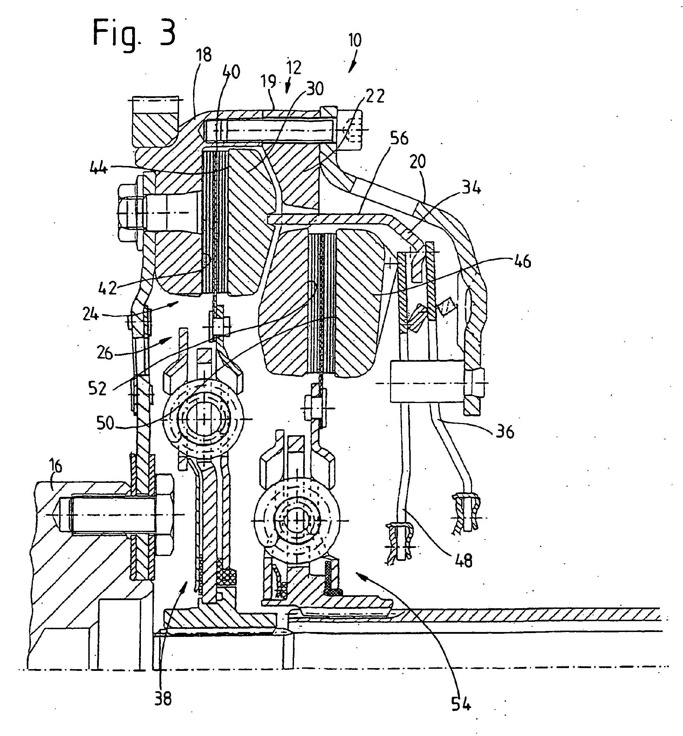

Eine abgewandelte Ausgestaltungsform einer Doppelkupplung ist in Fig. 3 gezeigt. Komponenten, welche vorangehend beschriebenen Komponenten entsprechen, sind mit dem gleichen Bezugszeichen bezeichnet.

Bei der in Fig. 3 dargestellten Ausgestaltungsform umfasst die Gehäuseanordnung 12 drei Gehäusebauteile 18, 19, 20. Das Gehäusebauteil 18 ist über eine Flexplattenanordnung oder ggf. wieder einen Torsionsschwingungsdämpfer an die Antriebswelle 16 angebunden und stellt an der von der Antriebswelle entfernt liegenden Seite eine Reiboberfläche 42 bereit. Ein weiteres Gehäusebauteil 19 bildet im Wesentlichen den ringscheibenartigen Abschnitt 22, der weiter nach radial innen greift und an seiner ebenfalls von der Antriebswelle 16 entfernten Seite die Reiboberfläche 52 bereit stellt. Die Anpressplatte 30 des ersten Kupplungsbereichs 26 ist zwischen den beiden Gehäusebauteilen 18, 19 mit Axialbewegungsspiel aufgenommen und steht unter der Beaufschlagung des Betätigungskraftübertragungselements 34, welches wiederum unter der Kraftbeaufschlagung des Kraftspeichers 36 des ersten Kupplungsbereichs 26 steht. Das Betätigungskraftübertragungselement, welches bereichsweise das Gehäusebauteil 19 bzw. den ringscheibenartigen Abschnitt 22 durchgreift, überträgt also eine Schubkraft auf die Anpressplatte 30. Die Anpressplatte 46 des zweiten Kupplungsbereichs 28 liegt zwischen den beiden Gehäusebauteilen 19, 20 und steht wieder direkt unter der Beaufschlagung des Kraftspeichers 48, welcher axial bezüglich des Gehäusebauteils 20 abgestützt ist, beispielsweise über den Kraftspeicher 36.

Bei der in Fig. 3 dargestellten Ausgestaltungsform bilden also im Wesentlichen die beiden Gehäusebauteile 18, 19 mit ihren in der gleichen axialen Richtung orientierten Reiborberflächen 42, 52 die Widerlageranordnung 24, gegen welche die beiden Kupplungsscheiben 38, 54 mit ihren Reibbelägen 40, 56 pressbar sind. Im Unterschied zur Ausgestaltungsform gemäß Fig. 1 werden also bei der Ausgestaltungsform gemäß Fig. 3 die beiden Anpressplatten 30, 46 zur Erlangung des Einrückzustandes des jeweiligen Kupplungsbereichs 26, 28 in der gleichen axialen Richtung bewegt bzw. beaufschlagt, während bei der Ausgestaltungsform gemäß Fig. 1 hier eine gegenläufige Bewegung vorhanden war.

Es sei darauf hingewiesen, dass eine Doppelkupplung, die, wie sie vorangehend beschrieben worden ist, in verschiedensten Bereichen auch anders ausgebildet sein könnte. Es ist möglich, in Zuordnung zu zumindest einem der Kupplungsbereiche 26, 28 eine Verschleißkompensationsvorrichtung bereitzustellen. Ebenso ist es möglich, wenigstens einen der Kupplungsbereiche 26, 28 als-normal-offen-Kupplung auszugestalten. Dies bedeutet, die Einrück- bzw. Betätigungskraft wird dann nicht durch einen Kraftspeicher erzeugt bzw. übertragen, sondern beispielsweise durch an Stelle des Kraftspeichers dann vorgesehene Einrückkraftübertragungshebelelemente, die unter der Beaufschlagung eines Einrückersystems stehen können. Ferner ist es, wie in Fig. 3 bereits erkennbar, möglich, auch im Bereich der Kupplungsscheiben 38 oder/und 54 Torsionsschwingungsdämpfungsanordnungen bereitzuhalten.

Gemäß der vorliegenden Erfindung ist vorgesehen, dass bei einer derartigen Doppelkupplung bzw. bei zumindest einer der Kupplungsscheiben 38, 54 derselben, die Reibbeläge 40 bzw. 56 aus einem Material aufgebaut sind, das den im Innenbereich von Doppelkupplungen auftretenden Belastungen besonders gewachsen ist. Ein bevorzugtes Aufbaumaterial ist metallisches Sintermaterial, ebenso wie keramisches Sintermaterial. Diese beiden allgemein auch als nicht-organische Aufbaumaterialien zu betrachtenden Materialien sind im Vergleich zu organischen Materialien vergleichsweise hart und thermisch beständiger. Dies hat zur Folge, dass auch länger anhaltende Schlupfphasen nicht zu einem übermäßigen Abrieb bzw. einer übermäßigen und die Struktur zerstörenden Erwärmung dieser Reibbeläge führen können. Auch andere nicht-organische Materialien können hier zum Einsatz kommen, wie z.B. Keramikplättchen aus monolithischer oder modifizierter Al₂O₃- oder SiC-Keramik. Auch Verbundkeramikmaterialien, wie z.B. Al/Al₂O₃ oder Cu/Al₂O₃ können zum Einsatz kommen, ebenso wie ZrO₂- oder Si₃N₄-Keramikmaterial. Auch der Einsatz anderer keramischer Werkstoffe, wie z.B. Faserglas, im Bereich der Reibbeläge, ist möglich.

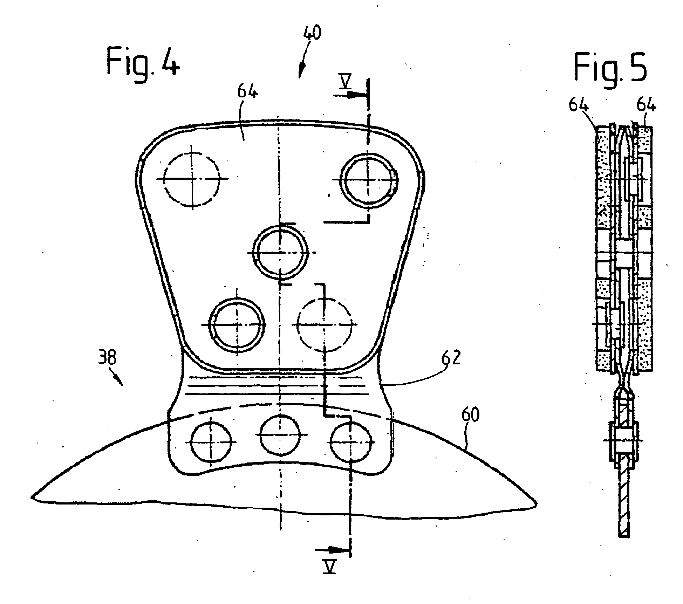

Da derartige nicht-organische Aufbaumaterialien vergleichsweise spröde Materialien sind, ist es vorteilhaft, die Reibbeläge 40 bzw. 56 der Kupplungsscheiben 38, 54 nicht ringartig durchgehend, sondern segmentiert auszugestalten. Dies ist in Fig. 4 bzw. in Fig. 5 erkennbar. Man erkennt beispielsweise in Fig. 4 anhand der Kupplungsscheibe 38 (selbiges gilt selbstverständlich auch für die-Kupplungsscheibe 54), dass diese einen ring- oder scheibenartigen, beispielsweise aus Blechmaterial aufgebauten Trägerbereich 60 unfasst, an den radial außen vorteilhafterweise aber nicht notwendigerweise über eine allgemein mit 62 bezeichnete Belagsfederungsanordnung in Umfangsrichtung begrenzte Reibbelagssegmente 64 beispielsweise durch Vernietung angebunden sind. Im Bereich der Reibbelagsfederungsanordnung 62 sind dann an beiden axialen Seiten derartige Reibbelagssegmente 64 vorgesehen. Selbstverständlich sind mehrere derartige Baugruppen 62, 64 in Umfangsrichtung aufeinander folgend am Trägerbereich 60 vorgesehen. Somit ist dafür gesorgt, dass die im Drehbetrieb auf derartige Reibbeläge einwirkenden Fliehkräfte nicht zu einer übermäßigen Belastung und Zerstörung der Reibbeläge führen können.

Derartige nicht-organische Reibbeläge von Kupplungsscheiben haben zur Folge, dass die mit diesen reibend wirksam werdenden Reibpartner, also die Anpressplatten 30, 46 bzw. die Widerlageranordnung 24 in ihren reibend wirksam werdenden Oberflächenbereichen 42, 50, 44, 52 einer vergleichsweise starken Reibbelastung ausgesetzt werden. Gemäß einem weiteren Aspekt der vorliegenden Erfindung wird daher vorgeschlagen, wenigstens einen Teil dieser Reibpartner zumindest im Bereich ihrer reibend wirksam werdenden Oberflächen aus Materialien aufzubauen, die im Vergleich zu herkömmlicherweise eingesetztem Graugussmaterial verschleißfester bzw. auch leichter sind. Hier kommen insbesondere partikelverstärktes Aluminium, welches unter dem Handelsnamen Duraican^{®} bekannt ist, sowie C/C-SiC in Frage. Auch oberflächenbehandeltes Graugussmaterial kann zum Einsatz gelangen. Die Oberflächenbehandlung kann beispielsweise eine Oberflächenhärtung, eine Oberflächenbeschichtung durch Hartverchromen oder Plasmabeschichten oder dgl. umfassen.

Durch die vorliegende Erfindung ist vorgesehen, in einer Doppelkupplung im Bereich der Kupplungsbereiche derselben Reibpartner miteinander in Reibwechselswirkung zu bringen, die einerseits besser auf die in Doppelkupplungen auftretenden vergleichsweise großen Reibbelastungen abgestimmt sind, die andererseits auch besser aufeinander abgestimmt sind. Es wird auf Grund des Einsatzes dieser reibend wirksam werdenden Werkstoffe, welche eine höhere Verschleißfestigkeit, eine höhere Temperaturbeständigkeit und eine höhere Wärmekapazität aufweisen, möglich, Doppelkupplungen kompakt und leichter zu bauen. Auch ist in dem Falle, in welchem keine Verschleißkompensationsvorrichtungen vorgesehen sind, das vorzuhaltende Verschleißvolumen im Bereich der verschiedenen reibend wirksamen Bauteile geringer.

## Patentansprüche

1. Doppelkupplungsanordnung, umfassend zwei Kupplungsbereiche (26, 28) jeweils mit einer Anpressplatte (30, 46) und einer Widerlageranordnung (24), welche Reiboberflächen (42, 44, 50, 52) zur reibmäßigen Zusammenwirkung mit einer Reibbelagsanordnung (40, 56) einer jeweils zugeordneten Kupplungsscheibe (38, 54) aufweisen, wobei die Reibbelagsanordnung (40, 56) von zumindest einer Kupplungsscheibe (38, 54) aus nicht-organischem Material aufgebaut ist, **dadurch gekennzeichnet,**
**dass** die Anpressplatte (30, 46) oder/und die Widerlageranordnung (24) des wenigstens einen der beiden Kupplungsbereiche (26, 28) im Bereich ihrer Reiboberflächen (42, 44, 50, 52) aus C/C-SiC-Material oder aus partikelverstärktem Aluminium aufgebaut sind.

2. Doppelkupplungsanordnung nach Anspruch 1,
**dadurch gekennzeichnet, dass** die Reibbelagsanordnung (40, 56) der Kupplungsscheibe (38, 54) des wenigstens einen der beiden Kupplungsbereiche (26, 28) eine Mehrzahl von in Umfangsrichtung um eine Drehachse aufeinander folgenden Reibbelagssegmenten umfasst.

3. Doppelkupplungsanordnung nach Anspruch 1 oder 2, **dadurch gekennzeichnet, dass** die Reibbelagsanordnung (40, 56) der Kupplungsscheibe (38, 54) des wenigstens einen der beiden Kupplungsbereiche (26, 28) wenigstens zum Teil aus Metallmaterial, vorzugsweise Metallsintermaterial aufgebaut ist.

4. Doppelkupplungsanordnung nach einem der Ansprüche 1 bis 3, **dadurch gekennzeichnet, dass** die Reibbelagsanordnung (40, 56) der Kupplungsscheibe (38, 54) des wenigstens einen der beiden Kupplungsbereiche (26, 28) wenigstens zum Teil aus Keramikmaterial, vorzugsweise keramischem Sintermaterial, aufgebaut ist.

## Claims

1. Double clutch arrangement comprising two clutch regions (26, 28) each with a pressure plate (30, 46) and a counterbearing arrangement (24) which have friction surfaces (42, 44, 50, 52) for frictional interaction with a friction lining arrangement (40, 56) of a respectively associated clutch disc (38, 54), the friction lining arrangement (40, 56) of at least one clutch disc (38, 54) being constructed from inorganic material,
**characterized**
**in that** the pressure plate (30, 46) and/or the counterbearing arrangement (24) of the at least one of the two clutch regions (26, 28) are constructed, in the region of their friction surfaces (42, 44, 50, 52), from C/C-SiC material or from particle-reinforced aluminium.

2. Double clutch arrangement according to Claim 1, **characterized in that** the friction lining arrangement (40, 56) of the clutch disc (38, 54) of the at least one of the two clutch regions (26, 28) comprises a multiplicity of friction lining segments arranged in succession in the circumferential direction about an axis of rotation.

3. Double clutch arrangement according to Claim 1 or 2, **characterized in that** the friction lining arrangement (40, 56) of the clutch disc (38, 54) of the at least one of the two clutch regions (26, 28) is constructed at least partially from metallic material, preferably metallic sintered material.

4. Double clutch arrangement according to one of Claims 1 to 3, **characterized in that** the friction lining arrangement (40, 56) of the clutch disc (38, 54) of the at least one of the two clutch regions (26, 28) is constructed at least partially from ceramic material, preferably ceramic sintered material.

## Revendications

1. Ensemble à embrayage double, comprenant deux parties d'embrayage (26, 28) ayant chacune une plaque de pression (30, 46) et un ensemble de butée (24), qui présentent des surfaces de friction (42, 44, 50, 52) pour coopérer par friction avec un ensemble de garniture de friction (40, 56) d'un disque d'embrayage respectivement associé (38, 54), l'ensemble de garniture de friction (40, 56) étant constitué d'au moins un disque d'embrayage (38, 54) en matériau non organique,
**caractérisé en ce que**
la plaque de pression (30, 46) et/ou l'agencement de butée (24) de l'au moins une des deux parties d'embrayage (26, 28) sont réalisés dans la région de leurs surfaces de friction (42, 44, 50, 52) en matériau C/C-sic ou en aluminium renforcé par des particules.

2. Ensemble à embrayage double selon la revendication 1,
**caractérisé en ce que** l'ensemble de garniture de friction (40, 56) du disque d'embrayage (38, 54) de l'au moins une des deux parties d'embrayage (26, 28) comprend une pluralité de segments de garniture de friction successifs dans la direction périphérique autour d'un axe de rotation.

3. Ensemble à embrayage double selon la revendication 1 ou 2, **caractérisé en ce que** l'ensemble de garniture de friction (40, 56) du disque d'embrayage (38, 54) de l'au moins une des deux parties d'embrayage (26, 28) est constitué au moins en partie d'un matériau métallique, de préférence d'un matériau métallique fritté.

4. Ensemble à embrayage double selon l'une quelconque des revendications 1 à 3, **caractérisé en ce que** l'ensemble de garniture de friction (40, 56) du disque d'embrayage (38, 54) de l'au moins une des deux parties d'embrayage (26, 28) est constitué au moins en partie d'un matériau céramique, de préférence d'un matériau céramique fritté.
